# EUROPÄISCHE PATENTANMELDUNG

(11) **EP 4 458 649 A1**
(43) Veröffentlichungstag der Anmeldung: **06.11.2024**
(21) Anmeldenummer: 24172998.7
(22) Anmeldetag: 29.04.2024
(51) Int. Cl.: B62D 1/04

(54) **VERFAHREN UND VORRICHTUNG ZUM ERKENNEN EINES KONTAKTES VON HÄNDEN MIT EINEM LENKRAD EINES FAHRZEUGS**

(30) Priorität: 03.05.2023 DE 102023204053
(71) Anmelder: VOLKSWAGEN AG, 38440 Wolfsburg (DE)
(72) Erfinder: Kaste, Jonas, 31061 Alfeld (Leine) (DE); Münning, Dr. Daniel, 38124 Braunschweig (DE); Stahl, Felix, 38106 Braunschweig (DE)

(57) **Zusammenfassung**

Die Erfindung betrifft ein Verfahren zum Erkennen eines Kontaktes von Händen mit einem Lenkrad (52) eines Fahrzeugs (50), wobei ausgehend von zumindest erfassten und/oder empfangenen Zustandsdaten (10) eines Lenksystems (51) des Fahrzeugs (50) mittels mindestens eines trainierten Maschinenlernverfahrens (3) eine Entscheidung (20) getroffen wird, ob wenigstens eine Hand im Kontakt mit dem Lenkrad (52) ist oder nicht, wobei hierbei eine Betätigung von mindestens einem an dem Lenkrad (52) angeordneten Bedienelement (54-x) als Eingangsgröße (11) des mindestens einen trainierten Maschinenlernverfahrens (3) berücksichtigt wird, und wobei ein Entscheidungssignal (21) erzeugt und bereitgestellt wird. Ferner betrifft die Erfindung eine Vorrichtung (1) zum Erkennen eines Kontaktes von Händen mit einem Lenkrad (52) eines Fahrzeugs (50).

## Beschreibung

Die Erfindung betrifft ein Verfahren und eine Vorrichtung zum Erkennen eines Kontaktes von Händen mit einem Lenkrad eines Fahrzeugs.

In modernen Fahrzeugen werden Fahrer von Fahrerassistenzsystemen unterstützt, die Fahrerassistenzfunktionen bereitstellen. Beispiele hierfür sind eine automatisierte oder teilautomatisierte Längs- und/oder Querführung des Fahrzeugs. Derzeit ist es noch üblich, dass der Fahrer in regelmäßigen Abständen seine Hände am Lenkrad anordnen muss, damit ein automatisierter oder teilautomatisierter Betrieb möglich ist. Anderenfalls wird die Fahrerassistenzfunktion deaktiviert. Zum Erfassen wenigstens einer Hand am Lenkrad (auch als Hands-On-Detektion bezeichnet) können verschiedene Sensoren und/oder Verfahren eingesetzt werden.

Beispielsweise kann mittels eines kapazitiven Sensors an einem Lenkrad des Fahrzeugs festgestellt werden, ob sich wenigstens eine Hand des Fahrers am Lenkrad befindet oder nicht. Aus den kapazitiv erfassten Sensordaten kann beispielsweise ein mehrstufiger Status bestimmt werden (z.B. kein Kontakt, leicht umgriffen links/rechts bis stark umgriffen beidseitig usw.), der beispielsweise an Unterstützungsfunktionen, wie z.B. ein Längs- und/oder Querführungsassistenzsystem übermittelt wird. Beispielsweise kann ein solcher Status einem Abstandsregeltempomat (engl. Adaptive Cruise Control, ACC) als Eingang zugeführt werden, wobei bei Feststellen eines Kontaktes wenigstens einer Hand mit dem Lenkrad beispielsweise ein Anfahrvorgang zum Folgen eines Vorderfahrzeuges freigeschaltet wird. Ferner sind Fahrerbeobachtungskameras bekannt, welche eine Fahreraktivität erkennen können.

Darüber hinaus gibt es Verfahren, die eine Fahreraktivität, insbesondere in Bezug auf eine Hands-On-Detektion, mittels Verfahren der Künstlichen Intelligenz (Maschinenlernen) oder regelbasierten Ansätzen erkennen. Beispielsweise kann ein Verfahren der Künstlichen Intelligenz, insbesondere ein künstliches Neuronales Netz, darauf trainiert sein, ausgehend von einem an einer Lenkung erfassten Drehmoment, einem erfassten Lenkwinkel und/oder Änderungen dieser Größen eine Hands-On-Detektion durchzuführen. Ein solches Verfahren ist beispielsweise aus der US 2022 / 0 161 846 A1 bekannt. Der regelbasierte Ansatz wertet hingegen passiv Lenksignale (z.B. ein Lenkmoment, eine Lenkgeschwindigkeit und/oder einen Lenkwinkel) gegenüber Schwellwerten und/oder Signalverläufe aus und/oder arbeitet aktiv mit einer Momentenaufschaltung, bei der mittels eines Aktuators ein Testsignal auf das Lenkrad aufgeprägt wird, welches ein Gegenmoment von am Lenkrad angeordneten Händen hervorrufen soll, das mittels eines Sensors erfasst werden kann. Sobald ein solches Gegenmoment erfasst wurde, wird davon ausgegangen, dass wenigstens eine Hand am Lenkrad angeordnet ist. Ein solches Verfahren ist beispielsweise aus der DE 10 2013 209 459 A1 bekannt.

Der Erfindung liegt die Aufgabe zu Grunde, ein Verfahren und eine Vorrichtung zum Erkennen eines Kontaktes von Händen mit einem Lenkrad eines Fahrzeugs zu verbessern.

Die Aufgabe wird erfindungsgemäß durch ein Verfahren mit den Merkmalen des Patentanspruchs 1 und eine Vorrichtung mit den Merkmalen des Patentanspruchs 10 gelöst. Vorteilhafte Ausgestaltungen der Erfindung ergeben sich aus den Unteransprüchen.

Insbesondere wird ein Verfahren zum Erkennen eines Kontaktes von Händen mit einem Lenkrad eines Fahrzeugs zur Verfügung gestellt, wobei ausgehend von zumindest erfassten und/oder empfangenen Zustandsdaten eines Lenksystems des Fahrzeugs mittels mindestens eines trainierten Maschinenlernverfahrens eine Entscheidung getroffen wird, ob wenigstens eine Hand im Kontakt mit dem Lenkrad ist oder nicht, wobei hierbei eine Betätigung von mindestens einem an dem Lenkrad angeordneten Bedienelement als Eingangsgröße des mindestens einen trainierten Maschinenlernverfahrens berücksichtigt wird, und wobei ein Entscheidungssignal erzeugt und bereitgestellt wird.

Ferner wird insbesondere eine Vorrichtung zum Erkennen eines Kontaktes von Händen mit einem Lenkrad eines Fahrzeugs geschaffen, umfassend eine Datenverarbeitungseinrichtung, wobei die Datenverarbeitungseinrichtung dazu eingerichtet ist, erfasste und/oder abgefragte Zustandsdaten eines Lenksystems des Fahrzeugs zu empfangen und mindestens ein trainiertes Maschinenlernverfahren bereitzustellen, welches ausgehend von zumindest den empfangenen Zustandsdaten eine Entscheidung trifft, ob wenigstens eine Hand im Kontakt mit dem Lenkrad ist oder nicht, wobei hierbei eine Betätigung von mindestens einem an dem Lenkrad angeordneten Bedienelement als Eingangsgröße des mindestens einen trainierten Maschinenlernverfahrens berücksichtigt wird, und ein Entscheidungssignal bereitzustellen.

Das Verfahren und die Vorrichtung ermöglichen es, eine Betätigung von mindestens einem am Lenkrad angeordneten Bedienelement bei der Entscheidung, ob eine Hand im Kontakt mit dem Lenkrad ist oder nicht (Hands-On-Detektion) als Eingangsgröße zu berücksichtigen. Das mindestens eine trainierte Maschinenlernverfahren erhält hierdurch ein weiteres Eingangsdatum bzw. eine weitere Dimension von Eingangsdaten zur Verfügung gestellt. Insgesamt kann die Entscheidungsfindung hierdurch robuster ausgestaltet werden, weil mehr Daten berücksichtigt werden können.

Zustandsdaten des Lenksystems sind insbesondere ein erfasstes Lenkmoment und/oder ein erfasster Lenkwinkel. Ferner können auch Änderungen dieser Größen berücksichtigt werden. Die Zustandsdaten und die Eingangsgröße werden dem trainierten Maschinenlernverfahren als Eingangsdaten zugeführt.

Ein trainiertes Maschinenlernverfahren ist insbesondere ein trainiertes Neuronales Netz, insbesondere ein trainiertes tiefes Neuronales Netz. Das trainierte Maschinenlernverfahren ist darauf trainiert, ausgehend von den Zustandsdaten des Lenksystems eine Entscheidung zu treffen bzw. zu schätzen, ob wenigstens eine Hand am Lenkrad ist oder nicht. Ein Ergebnis wird als Entscheidungssignal bereitgestellt. Die Entscheidung kann zumindest zwei mögliche Werte umfassen (z.B. Kontakt ja/nein bzw. entsprechende Werte eines Datenpakets oder Signalpegels). Grundsätzlich sind aber auch Abstufungen bei der Entscheidung möglich (z.B.: keine Hand am Lenkrad, eine Hand am Lenkrad, beide Hände am Lenkrad usw.). Das Maschinenlernverfahren wird ausgehend von Trainingsdaten in an sich bekannter Weise trainiert. Als Trainingsdaten kommen insbesondere jeweils Paare aus Zustandsdaten als Eingangsdaten und hierfür bekannter Entscheidungsdaten (Kontakt ja/nein etc.) als Ausgangdaten bzw. Grundwahrheit zum Einsatz. Ferner wird hierbei als Eingangsdatum auch eine Information zur Betätigung des mindestens einen Bedienelements verwendet, das heißt, es wird als Eingangsdatum beim Trainieren (und später beim Anwenden des Maschinenlernverfahrens) auch die Information berücksichtigt, ob das mindestens eine Bedienelement betätigt wird oder nicht.

Ein am Lenkrad angeordnetes Bedienelement ist insbesondere ein Taster, ein Slider, eine Taste oder ein Potentiometer. Beispiele für Bedienelemente am Lenkrad sind eine Telefonsteuerung (z.B. Tasten für "Anruf annehmen", "Auflegen" usw.), eine Multimediasteuerung (z.B. Tasten für "lauter", "leiser", "weiter", "stumm schalten" usw.), eine Tempomatsteuerung (z.B. Tasten für "SET", "RESUME" usw.) und Gangschaltungshebel (z.B. Hebel oder Tasten für "Gang erhöhen", "Gang erniedrigen", Tiptronic^{®} usw.).

Teile der Vorrichtung, insbesondere die Datenverarbeitungseinrichtung, können einzeln oder zusammengefasst als eine Kombination von Hardware und Software ausgebildet sein, beispielsweise als Programmcode, der auf einem Mikrocontroller oder Mikroprozessor ausgeführt wird. Es kann jedoch auch vorgesehen sein, dass Teile einzeln oder zusammengefasst als anwendungsspezifische integrierte Schaltung (ASIC) und/oder feldprogrammierbares Gatterfeld (FPGA) ausgebildet sind.

In einer Ausführungsform ist vorgesehen, dass zumindest eine Teilmenge der an dem Lenkrad angeordneten Bedienelemente individuell berücksichtigt wird. Hierdurch kann jedes Bedienelement am Lenkrad im Hinblick auf seine individuellen Eigenschaften bei einer Entscheidungsfindung berücksichtigt werden. Insbesondere kann vorgesehen sein, sämtliche Bedienelemente jeweils individuell zu berücksichtigen. Das trainierte Maschinenlernverfahren erhält dann zusätzlich eine Information als Eingangsdatum, welche das betätigte mindestens eine Bedienelement eindeutig identifiziert. Durch die zusätzliche Information kann die Entscheidungsfindung verbessert werden, insbesondere ist die Entscheidungsfindung ausdifferenzierter und somit robuster. Beim Trainieren des mindestens einen Maschinenlernverfahrens wird die Information, welche das mindestens eine Bedienelement am Lenkrad eindeutig identifiziert, entsprechend berücksichtigt.

In einer Ausführungsform ist vorgesehen, dass zumindest eine Teilmenge der an dem Lenkrad angeordneten Bedienelemente gruppiert nach Klassen berücksichtigt wird. Hierdurch kann ein Aufwand beim Trainieren des Maschinenlernverfahrens reduziert werden, da nicht mehr für alle Bedienelemente Trainingsdaten erzeugt und bereitgestellt werden müssen, sondern nur für die Klassen. Dies reduziert Aufwand und Kosten der Trainingsphase. Insbesondere kann vorgesehen sein, sämtliche Bedienelemente am Lenkrad gruppiert nach Klassen zu berücksichtigen. Das Gruppieren nach Klassen kann beispielsweise in Abhängigkeit von einer Art des jeweiligen Bedienelements und/oder einer Position des jeweiligen Bedienelements auf dem Lenkrad erfolgen.

In einer Ausführungsform ist vorgesehen, dass beim Erfassen einer Betätigung des mindestens einen Bedienelements ein Testsignal auf das Lenkrad aufgeprägt wird, wobei ein hierdurch hervorgerufenes Gegenmoment erfasst und bei der Entscheidung berücksichtigt wird. Hierdurch kann beim Betätigen des mindestens einen Bedienelements überprüft werden, ob sich eine Hand am Lenkrad befindet oder nicht. Auch das Betätigen des mindestens einen Bedienelements kann hierdurch verbessert, insbesondere in Form eines Gegenmoments, erfasst und bei der Entscheidung berücksichtigt werden. Die Entscheidungsfindung kann hierdurch weiter ausdifferenziert und somit robuster gemacht werden.

In einer Ausführungsform ist vorgesehen, dass eine Art des betätigten mindestens einen Bedienelements berücksichtigt wird. Hierdurch kann auch die Art des betätigten mindestens einen Bedienelements bei der Entscheidungsfindung berücksichtigt werden. Eine Art beinhaltet beispielsweise wenigstens eine der folgenden Information: mechanische Taste, mechanisches Potentiometer, mechanischer Hebel, kapazitive Taste usw. Die Entscheidungsfindung kann hierdurch weiter ausdifferenziert und somit robuster gemacht werden.

In einer Ausführungsform ist vorgesehen, dass eine Position des mindestens einen Bedienelements auf dem Lenkrad und/oder ein Abstand des betätigten mindestens einen Bedienelements zu einer Drehachse des Lenkrads berücksichtigt wird. Hierdurch kann insbesondere beim Aufprägen eines Testsignals die Position und/oder der Abstand bei der Entscheidungsfindung berücksichtigt werden. Der Gedanke dahinter ist, dass beim Aufprägen des Testsignals ein Gegenmoment bei gleicher Betätigungskraft, mit der das mindestens eine Betätigungselement betätigt wird, aufgrund der positionsbedingten und/oder abstandsbedingten Hebelwirkung unterschiedlich ist. Beispielsweise kann eine Taste 5 cm von der Drehachse entfernt liegen, eine andere Taste hingegen 10 cm. Bei gleich großem Testsignal (Drehmoment) wird ein erfasstes Gegenmoment bei gleicher Betätigungskraft an den Tasten aufgrund des unterschiedlichen Hebelarms um den Faktor 2 unterschiedlich sein. Die Entscheidungsfindung kann hierdurch weiter ausdifferenziert und somit robuster gemacht werden.

In einer Ausführungsform ist vorgesehen, dass ausgehend von dem betätigten mindestens einen Bedienelement ein Korrekturfaktor berücksichtigt wird. Hierdurch kann insbesondere beim Aufprägen des Testsignals eine unterschiedliche Hebelwirkung berücksichtigt und/oder korrigiert werden. Es kann beispielsweise vorgesehen sein, ein erfasstes Gegenmoment mittels des Korrekturfaktors zu korrigieren und das korrigierte Gegenmoment dem trainierten Maschinenlernverfahren als Eingangsdatum für die Entscheidungsfindung zuzuführen. Bei dem voranstehenden Beispiel könnte beispielsweise für die Taste, die im Abstand von 5 cm von der Drehachse angeordnet ist, ein Korrekturfaktor von 2 vorgesehen sein, sodass ein erfasstes Gegenmoment sich im Ergebnis verdoppelt und somit bei gleicher Betätigungskraft gleich einem erfassten Gegenmoment an der anderen Taste ist. Ein solcher Korrekturfaktor kann beispielsweise ausgehend von der Position und/oder dem Abstand des betätigten mindestens einen Bedienelements am Lenkrad bestimmt und bereitgestellt werden. Beispielsweise kann eine zum Bestimmen vorgegebene Regel in der Datenverarbeitungseinrichtung hinterlegt sein.

Der Korrekturfaktor kann beispielsweise eine Funktion des Abstands sein: k = f(d) = c/d, wobei k der Korrekturfaktor ist, c eine (Normierungs-)Konstante und d der Abstand zur Drehachse. Die Entscheidungsfindung kann hierdurch weiter ausdifferenziert und somit robuster gemacht werden.

In einer Ausführungsform ist vorgesehen, dass beim Berücksichtigen des betätigten mindestens einen Bedienelements ferner ein Fahrerprofil eines Fahrers berücksichtigt wird. Hierdurch können individuelle Eigenschaften des Fahrers berücksichtigt werden. Individuelle Eigenschaften (große Person, kleine Person usw.) können insbesondere eine Stärke der Betätigung beeinflussen. Das Fahrerprofil kann entweder von dem Fahrer selbst gewählt werden oder aufgrund von erfassten Sensordaten (z.B. von einem Gewichtssensor im Fahrersitz und/oder einer Fahrerkamera etc.) automatisiert ausgewählt werden. Insbesondere kann der voranstehend beschriebene Korrekturfaktor in Abhängigkeit von dem Fahrerprofil bestimmt, ausgewählt und/oder angepasst werden. Die Entscheidungsfindung kann hierdurch weiter ausdifferenziert und somit robuster gemacht werden.

In einer Ausführungsform ist vorgesehen, dass ein Fahrer mittels mindestens einer Fahrerkamera erfasst wird, wobei zusätzlich mindestens eine erfasste Abbildung der mindestens einen Fahrerkamera ausgewertet und berücksichtigt wird. Hierdurch kann beispielsweise das voranstehend beschriebene Fahrerprofil bestimmt werden. Ferner kann beispielsweise ausgehend von der mindestens einen erfassten Abbildung eine Fahrerintention (Betätigen des Bedienelements erfolgt ungewollt oder gewollt, Fahrer ist dem Lenkrad zugewandt oder von diesem abgewandt etc.) bestimmt und berücksichtigt werden. Ein Auswertungsergebnis wird dem trainierten Maschinenlernverfahren ebenfalls als Eingangsdatum zugeführt und bei der Entscheidungsfindung berücksichtigt. Die Entscheidungsfindung kann hierdurch weiter ausdifferenziert und somit robuster gemacht werden.

Weitere Merkmale zur Ausgestaltung der Vorrichtung ergeben sich aus der Beschreibung von Ausgestaltungen des Verfahrens. Die Vorteile der Vorrichtung sind hierbei jeweils die gleichen wie bei den Ausgestaltungen des Verfahrens.

Nachfolgend wird die Erfindung anhand bevorzugter Ausführungsbeispiele unter Bezugnahme auf die Figur näher erläutert. Hierbei zeigt:

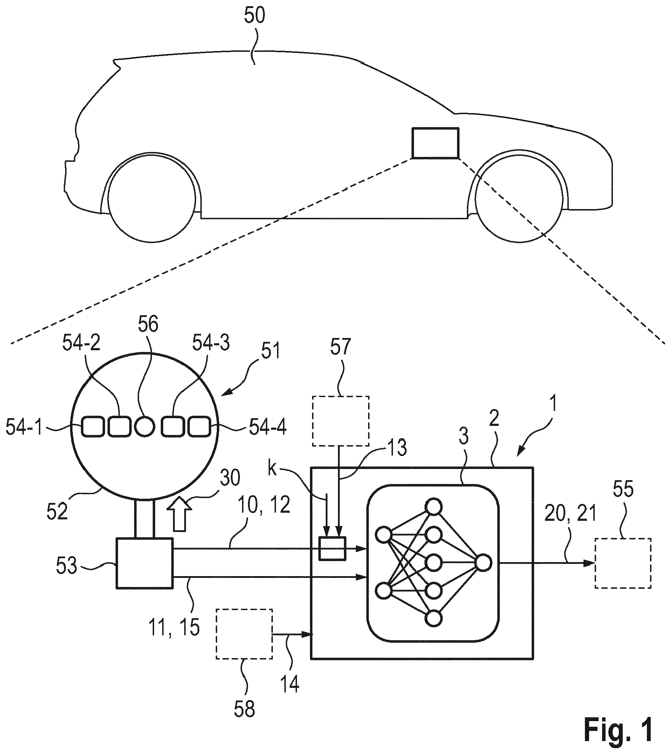

- Fig. 1: eine schematische Darstellung zur Verdeutlichung von Ausführungsformen der Vorrichtung zum Erkennen eines Kontaktes von Händen mit einem Lenkrad eines Fahrzeugs.

Die Fig. 1 zeigt eine schematische Darstellung zur Verdeutlichung von Ausführungsformen der Vorrichtung 1 zum Erkennen eines Kontaktes von Händen mit einem Lenkrad 52 eines Fahrzeugs 50. Die Vorrichtung 1 ist insbesondere in dem Fahrzeug 50 angeordnet. Die Vorrichtung 1 ist dazu eingerichtet, das in dieser Offenbarung beschriebene Verfahren auszuführen. Das Verfahren wird nachfolgend anhand der Vorrichtung 1 näher erläutert.

Die Vorrichtung 1 umfasst eine Datenverarbeitungseinrichtung 2. Die Datenverarbeitungseinrichtung 2 umfasst beispielsweise mindestens eine Recheneinrichtung (nicht gezeigt) und mindestens einen Speicher (nicht gezeigt). Die mindestens eine Recheneinrichtung führt zum Ausführen der Verfahrensschritte des Verfahrens notwendige Rechenoperationen aus.

Die Datenverarbeitungseinrichtung 2 ist dazu eingerichtet, erfasste und/oder abgefragte Zustandsdaten 10 eines Lenksystems 51 des Fahrzeugs 50, beispielsweise von einer Lenkungssteuerung 53, zu empfangen und mindestens ein trainiertes Maschinenlernverfahren 3 bereitzustellen, welches ausgehend von zumindest den empfangenen Zustandsdaten 10 eine Entscheidung 20 trifft, ob wenigstens eine Hand im Kontakt mit dem Lenkrad 52 ist oder nicht. Die Zustandsdaten 10 können beispielsweise ein erfasstes Lenkmoment und/oder einen erfassten Lenkwinkel und/oder Änderungen dieser Größen umfassen. Das mindestens eine trainierte Maschinenlernverfahren 3 umfasst insbesondere mindestens ein trainiertes Neuronales Netz, insbesondere ein trainiertes tiefes Neuronales Netz.

Es ist vorgesehen, dass hierbei eine Betätigung von mindestens einem an dem Lenkrad 52 angeordneten Bedienelement 54-x als Eingangsgröße 11 des mindestens einen Maschinenlernverfahrens 3 berücksichtigt wird. Die Lenkungssteuerung 53 kann der Datenverarbeitungseinrichtung 2 hierzu ein entsprechendes Betätigungssignal 15 für die Eingangsgröße 11 übermitteln, welches die Betätigung des mindestens einen Bedienelements 54-x kodiert.

Die Datenverarbeitungseinrichtung 2 ist ferner dazu eingerichtet, ausgehend von der getroffenen Entscheidung 20 ein Entscheidungssignal 21 bereitzustellen
Das Entscheidungssignal 21 kann beispielsweise einem Fahrerassistenzsystem 55 des Fahrzeugs 50 zugeführt werden, welches in Abhängigkeit von dem Entscheidungssignal 21 aktiviert oder deaktiviert wird. Ein solches Fahrerassistenzsystem 55 kann beispielsweise ein Abstandsregeltempomat (engl. Adaptive Cruise Control, ACC) sein, wobei eine Folgefunktion, bei der nach einem Stillstand des Fahrzeugs 50 das Folgen eines Vorderfahrzeugs ermöglicht wird, aktiviert oder deaktiviert wird, je nachdem, ob eine Hand im Kontakt mit dem Lenkrad 52 ist oder nicht.

Es kann vorgesehen sein, dass zumindest eine Teilmenge der an dem Lenkrad 52 angeordneten Bedienelemente 54-x individuell berücksichtigt wird. Die Eingangsgröße 11 bzw. das Betätigungssignal 15 umfassen dann zusätzlich eine Information, welche das betätigte Bedienelement 54-x eindeutig identifiziert.

Es kann ferner vorgesehen sein, dass zumindest eine Teilmenge der an dem Lenkrad 52 angeordneten Bedienelemente 54-x gruppiert nach Klassen berücksichtigt wird. Beispielsweise kann vorgesehen sein, die jeweils außen angeordneten Bedienelemente 54-1, 54-4 in einer Klasse zu berücksichtigen und die jeweils innen angeordneten Bedienelemente 54-2, 54-3 in einer anderen Klasse zu berücksichtigen. Die jeweiligen Bedienelemente 54-x werden dann nicht mehr einzeln, sondern nur noch gemäß ihrer jeweiligen Klasse berücksichtigt.

Es kann vorgesehen sein, dass beim Erfassen einer Betätigung des mindestens einen Bedienelements 54-x ein Testsignal 30 auf das Lenkrad 52 aufgeprägt wird, wobei ein hierdurch hervorgerufenes Gegenmoment 12 erfasst und bei der Entscheidung 20 berücksichtigt wird. Das Aufprägen erfolgt mittels eines Aktuators (nicht gezeigt) des Lenksystems 51 in an sich bekannter Weise. Das Erfassen des Gegenmoments 12 kann beispielsweise mittels eines Drehmomentsensors (nicht gezeigt) des Lenksystems 51 erfolgen.

Es kann vorgesehen sein, dass eine Art des betätigten mindestens einen Bedienelements 54-x berücksichtigt wird. Beispielsweise können die Bedienelemente 54-1, 54-2 als mechanische Tasten ausgebildet sein, die Bedienelemente 54-3 und 54-4 jedoch als kapazitiv arbeitende Tasten. Dieser Unterschied wird dem trainierten Maschinenlernverfahren 3 dann als zusätzliche Information bzw. Eingangsdatum zugeführt. Entweder kann die Art als Information in der Eingangsgröße 11 kodiert sein oder die Art ist für jedes Bedienelement 54-x einzeln oder gruppenweise in dem Speicher der Datenverarbeitungseinrichtung 2 hinterlegt und wird ausgehend von einer das jeweilige Betätigungselement 54-x eindeutig einzeln oder gruppenweise identifizierenden Information bestimmt. Beim Trainieren des Maschinenlernverfahrens 3 wird die Art des Bedienelementes 54-x entsprechend berücksichtigt.

Es kann vorgesehen sein, dass eine Position des mindestens einen Bedienelements 54-x auf dem Lenkrad 52 und/oder ein Abstand des betätigten mindestens einen Bedienelements 54-x zu einer Drehachse 56 des Lenkrads 52 berücksichtigt wird. Entweder kann die Position und/oder der Abstand als Information in der Eingangsgröße 11 kodiert sein oder die Position und/oder der Abstand ist für jedes Bedienelement 54-x einzeln oder gruppenweise in dem Speicher der Datenverarbeitungseinrichtung 2 hinterlegt und wird ausgehend von einer das jeweilige Betätigungselement 54-x eindeutig einzeln oder gruppenweise identifizierenden Information bestimmt.

Es kann vorgesehen sein, dass ausgehend von dem betätigten mindestens einen Bedienelement 54-x ein Korrekturfaktor k ausgewählt und berücksichtigt wird. Der Korrekturfaktor k kann beispielsweise ausgehend von einer das jeweilige Betätigungselement 54-x eindeutig einzeln oder gruppenweise identifizierenden Information bestimmt werden. Alternativ kann der Korrekturfaktor k beispielsweise ausgehend von einer jeweiligen Position und/oder einem jeweiligen Abstand des betätigten mindestens einen Betätigungselements 54-x bestimmt werden. Es kann beispielsweise vorgesehen sein, dass das erfasste Gegenmoment 12 mittels des bedienelementabhängigen Korrekturfaktors k korrigiert wird. Der Korrekturfaktor k ist insbesondere eine Funktion der Position und/oder des Abstandes.

Es kann vorgesehen sein, dass beim Berücksichtigen des betätigten mindestens einen Bedienelements 54-x ferner ein Fahrerprofil 13 eines Fahrers berücksichtigt wird. Hierbei kann insbesondere vorgesehen sein, den Korrekturfaktor k in Abhängigkeit von dem Fahrerprofil 13 zu wählen oder eine Information zum Fahrerprofil 13 direkt als Eingang des trainierten Maschinenlernverfahrens 3 zu verwenden. Das Fahrerprofil 13 kann beispielsweise von einem Fahrer ausgewählt werden. Das Fahrerprofil 13 kann alternativ auch von einer Fahrzeugsteuerung 57 bereitgestellt werden.

Es kann vorgesehen sein, dass ein Fahrer mittels mindestens einer Fahrerkamera 58 erfasst wird, wobei zusätzlich mindestens eine erfasste Abbildung 14 der mindestens einen Fahrerkamera 58 ausgewertet und berücksichtigt wird. Das Auswerten kann beispielsweise eine Blickrichtungserkennung und/oder ein Erkennen einer Fahrerintention umfassen, welche im Rahmen der Entscheidungsfindung bzw. Anwendung des trainierten Maschinenlernverfahrens 3 vom trainierten Maschinenlernverfahren 3 berücksichtigt wird und dem trainierten Maschinenlernverfahren 3 hierzu als Eingangsdatum zugeführt wird.

### Bezugszeichenliste

- 1: Vorrichtung
- 2: Datenverarbeitungseinrichtung
- 3: trainiertes Maschinenlernverfahren
- 10: Zustandsdaten
- 11: Eingangsgröße
- 12: Gegenmoment
- 13: Fahrerprofil
- 14: erfasste Abbildung
- 15: Betätigungssignal
- 20: Entscheidung
- 21: Entscheidungssignal
- 30: Testsignal
- 50: Fahrzeug
- 51: Lenksystems
- 52: Lenkrad
- 53: Lenkungssteuerung
- 54-x: Bedienelement
- 55: Fahrerassistenzsystem
- 56: Drehachse
- 57: Fahrzeugsteuerung
- 58: Fahrerkamera
- k: Korrekturfaktor

## Patentansprüche

1. Verfahren zum Erkennen eines Kontaktes von Händen mit einem Lenkrad (52) eines Fahrzeugs (50),
wobei ausgehend von zumindest erfassten und/oder empfangenen Zustandsdaten (10) eines Lenksystems (51) des Fahrzeugs (50) mittels mindestens eines trainierten Maschinenlernverfahrens (3) eine Entscheidung (20) getroffen wird, ob wenigstens eine Hand im Kontakt mit dem Lenkrad (52) ist oder nicht,
wobei hierbei eine Betätigung von mindestens einem an dem Lenkrad (52) angeordneten Bedienelement (54-x) als Eingangsgröße (11) des mindestens einen trainierten Maschinenlernverfahrens (3) berücksichtigt wird, und
wobei ein Entscheidungssignal (21) erzeugt und bereitgestellt wird.

2. Verfahren nach Anspruch 1, **dadurch gekennzeichnet, dass** zumindest eine Teilmenge der an dem Lenkrad (52) angeordneten Bedienelemente (54-x) individuell berücksichtigt wird.

3. Verfahren nach Anspruch 1 oder 2, **dadurch gekennzeichnet, dass** zumindest eine Teilmenge der an dem Lenkrad (52) angeordneten Bedienelemente (54-x) gruppiert nach Klassen berücksichtigt wird.

4. Verfahren nach einem der vorangegangenen Ansprüche, **dadurch gekennzeichnet, dass** beim Erfassen einer Betätigung des mindestens einen Bedienelements (54-x) ein Testsignal (30) auf das Lenkrad (52) aufgeprägt wird, wobei ein hierdurch hervorgerufenes Gegenmoment (12) erfasst und bei der Entscheidung (20) berücksichtigt wird.

5. Verfahren nach einem der vorangegangenen Ansprüche, **dadurch gekennzeichnet, dass** eine Art des betätigten mindestens einen Bedienelements (54-x) berücksichtigt wird.

6. Verfahren nach einem der vorangegangenen Ansprüche, **dadurch gekennzeichnet, dass** eine Position des mindestens einen Bedienelements (54-x) auf dem Lenkrad (52) und/oder ein Abstand des betätigten mindestens einen Bedienelements (54-x) zu einer Drehachse (56) des Lenkrads (56) berücksichtigt wird.

7. Verfahren nach einem der vorangegangenen Ansprüche, **dadurch gekennzeichnet, dass** ausgehend von dem betätigten mindestens einen Bedienelement (54-x) ein Korrekturfaktor (k) berücksichtigt wird.

8. Verfahren nach einem der vorangegangenen Ansprüche, **dadurch gekennzeichnet, dass** beim Berücksichtigen des betätigten mindestens einen Bedienelements (54-x) ferner ein Fahrerprofil (13) eines Fahrers berücksichtigt wird.

9. Verfahren nach einem der vorangegangenen Ansprüche, **dadurch gekennzeichnet, dass** ein Fahrer mittels mindestens einer Fahrerkamera (58) erfasst wird, wobei zusätzlich mindestens eine erfasste Abbildung (14) der mindestens einen Fahrerkamera (58) ausgewertet und berücksichtigt wird.

10. Vorrichtung (1) zum Erkennen eines Kontaktes von Händen mit einem Lenkrad (52) eines Fahrzeugs (50), umfassend:
eine Datenverarbeitungseinrichtung (2), wobei die Datenverarbeitungseinrichtung (2) dazu eingerichtet ist, erfasste und/oder abgefragte Zustandsdaten (10) eines Lenksystems (51) des Fahrzeugs (50) zu empfangen und mindestens ein trainiertes Maschinenlernverfahren (3) bereitzustellen, welches ausgehend von zumindest den empfangenen Zustandsdaten (10) eine Entscheidung (20) trifft, ob wenigstens eine Hand im Kontakt mit dem Lenkrad (52) ist oder nicht, wobei hierbei eine Betätigung von mindestens einem an dem Lenkrad (52) angeordneten Bedienelement (54-x) als Eingangsgröße (11) des mindestens einen trainierten Maschinenlernverfahrens (3) berücksichtigt wird, und ein Entscheidungssignal (21) bereitzustellen.
